# EUROPEAN PATENT SPECIFICATION

(11) **EP 2 908 007 B1**
(45) Date of publication and mention of the grant of the patent: **02.09.2020**
(21) Application number: 14155123.4
(22) Date of filing: 14.02.2014
(51) Int. Cl.: F03D 80/10

(54) **Tower device for a wind turbine**
Turmvorrichtung für eine Windturbine
Dispositif de tour pour turbine éolienne

(43) Date of publication of application: 19.08.2015
(73) Proprietor: Siemens Gamesa Renewable Energy A/S, 7330 Brande (DK)
(72) Inventor: Mathiasen, Soeren Oestergaard, 7323 Give (DK)
(74) Representative: Aspacher, Karl-Georg

(56) References cited:
- EP-A1- 2 213 876
- WO-A1-2006/077084
- JP-A- 2002 279 802

## Description

The invention relates to a tower device for a wind turbine, comprising a hollow cylindrical tower structure.

Respective tower devices are widely known and serve for supporting diverse functional units of onshore or offshore wind turbines such as the nacelle, the rotor hub, respective rotor blades attached to the rotor hub, etc.

Due to the steadily increasing dimensions of wind turbines, whereby future offshore wind turbines will comprise rotor blade tip heights exceeding 150 m from sea surface, respective tower devices have to be provided with marking devices for visually marking the tower structure at its outer circumference in order to be detectable by airplanes, helicopters, boats, ships etc.

Respective marking devices are typically provided at the outer circumference of the tower structure at a position half of the axial height of the tower structure. Therefore, accessing the marking devices is difficult. Thus, installation, service, and repair of respective marking devices is only possible with specially trained personnel under certain climatic conditions i.e. particularly at low wind periods. This will increase the operational costs of the wind turbine.

It is the object of the invention to provide a tower device for a wind turbine which allows for an eased installation, service, and repair of respective marking devices.

Prior art tower devices for wind turbines are known from EP 2 213 876 A1, JP 2002 279802 A and WO 2006/077084 A1.

The object is inventively achieved by a tower device as specified above.

The tower device is comprises:
- at least one opening provided with the tower structure,
- at least one marking device supporting element, which is adapted to support or supports at least one marking device for visually marking the tower structure at its outer circumference, with
- the marking device supporting element being adapted to be removably attachable to the inner circumference of the tower structure by at least one attachment means, whereby
- in an attached state of the marking device supporting element, the marking device supporting element is removably attached to the inner circumference of the tower structure in such a manner that the marking device is adapted to penetrate or penetrates through the opening of the tower structure so as to be disposed at the outer circumference of the tower structure.

The inventive tower device comprises a hollow cylindrical tower structure. Thereby, the term hollow cylindrical is not restricted to circular basic shapes, but also includes ellipsoid or prismatic basic shapes of the tower structure.

The tower structure is provided with at least one opening. The opening provides a passageway between the inside and the outside of the tower structure. Hence, the opening extends between the inner circumference and the outer circumference of the tower structure. The opening may be provided with the wall or between two adjacently disposed wall elements of the tower structure.

In order to avoid negatively affecting the structural integrity of the tower structure, the opening is preferably provided with a, particularly ring-like, wall reinforcement element at least partially reinforcing the wall thickness of the tower structure. With increasing the wall thickness of the tower structure, the wall reinforcement element increases the mechanical stability of the tower structure.

A respective wall reinforcement element may be welded to the inner circumference of the tower structure. A respective wall reinforcement element may particularly be provided between two axially directly adjacently disposed wall segments of the tower structure.

The marking device supporting element is adapted to support or supports at least one marking device for visually marking the tower structure at its outer circumference. Hence, the marking device supporting element builds a support for at least one respective marking device. Further operational equipment being related to the operation of the marking device such as particularly, control electronics for controlling the operation of the marking device may also be supported by the marking device supporting element. A marking device may comprise a lighting element such as a lamp or may be built as a respective lighting element.

The marking device supporting element is adapted to be removably attachable to the inner circumference of the tower structure by at least one attachment means. Hence, the marking device supporting element may be attached to the inner circumference or inside of the tower structure. Likewise the marking device supporting element may be detached from the inner circumference or inside of the tower structure. Therefore, attachment or detachment of the marking device supporting element may be easily and safely conducted from platforms provided inside the tower structure.

A respective attachment means may be provided with the marking device supporting element and/or the inner circumference of the tower structure. Typically, both the marking device supporting element and the inner circumference of the tower structure may be provided with corresponding attachment means allowing for mechanically stably yet, removably attaching the marking device supporting element to a respective attachment site provided with the inner circumference of the tower structure.

The attachment means is particularly, adapted to build a form- and/or force fit attachment of the marking device supporting element with the inner circumference of the tower structure. Therefore, the attachment means may comprises bolt elements and/or latching elements allowing for a removable attachment, for instance.

The marking device supporting element is removably attached to the inner circumference of the tower structure in an attached state. Thereby, the marking device supporting element is attached to the inner circumference of the tower structure in such a manner that the marking device is adapted to penetrate or penetrates through the opening so as to be disposed at the outer circumference of the tower structure. Thus, by being penetrated through the opening, the marking device may be brought from inside the tower structure to outside the tower structure.

Hence, the inventive principle allows for installing or de-installing respective marking devices at the outer circumference of the tower structure from inside the tower structure.

In order to install respective marking devices, the marking device supporting element has to be attached to the inner circumference of the tower structure in such a manner that the marking device penetrates or may penetrate through the opening provided with the tower structure. Having penetrated the opening, the marking device is disposed at the outer circumference of the tower structure so that the tower structure may easily be detected by airplanes, helicopters, boats, ships etc.

There is no need to engage specially trained personnel to climb the outer circumference of the tower structure for conducting installation, service, and repair of respective marking devices. Therefore, the inventive principle allows for reduced operational costs of wind turbines provided with inventive tower devices.

The marking device supporting element comprises a base body being built as plate. The plate may have an oval or circular shape. Generally, the shape of the plate shall be chosen under consideration of the constructive circumstances provided with the tower structure, i.e. particularly the attachment site provided with the inner circumference of the tower structure at which the marking device supporting element is to be attached.

The plate is typically made of a, preferably non-corroding, metal such as stainless steel, for instance. However, the plate may also be made of a polymer or polymer composite, respectively which may be particularly, advantageous in regard of corrosion behaviour and weight. A respective polymer may be an epoxy-resin, for instance.

The or a marking device may be directly supported on the marking device supporting element. In this case, the marking device supporting element comprises respective supporting means for directly supporting the marking device to the marking device supporting element, i.e. particularly a respective surface of the marking device supporting element. Hence, the marking device may be connected to the marking device supporting element by means of any force- and/or form- and/or material-fit connection. The marking device may therefore, be directly bolted, glued, latched, welded etc. to the marking device supporting element.

However, it is also possible that the or a marking device is indirectly supported to the marking device supporting element by means of a connecting cable. Hence, the or a marking device does not mandatorily have to directly supported to the marking device supporting element or a respective base body of the marking device supporting element. This embodiment may ease penetrating the marking device through the opening of the tower structure. A mechanical connection between the marking device and the marking device supporting element or a respective base body of the marking device supporting element may be provided by connecting cables. Thereby, a connecting cable may comprise an electrical supply of the marking device such as an electrical wire or the like.

The invention also relates to a marking device supporting element which is adapted to support or supports at least one marking device for visually marking a tower structure of a tower device at its outer circumference, whereby the marking device supporting element being adapted to be removably attachable to the inner circumference of a tower structure of a tower device as previously specified.

Hence, all annotations regarding the inventive tower device apply to the inventive marking device supporting element in analogous manner.

Specific embodiments of the invention will be described in detail herein below with reference to the figures, wherein:
- Fig. 1: shows a principle drawing of a tower device according to an exemplary embodiment of the invention;
- Fig. 2, 3: both show cut-views of the tower device of fig. 1; and
- Fig. 4: shows a cut-view of fig. 2.

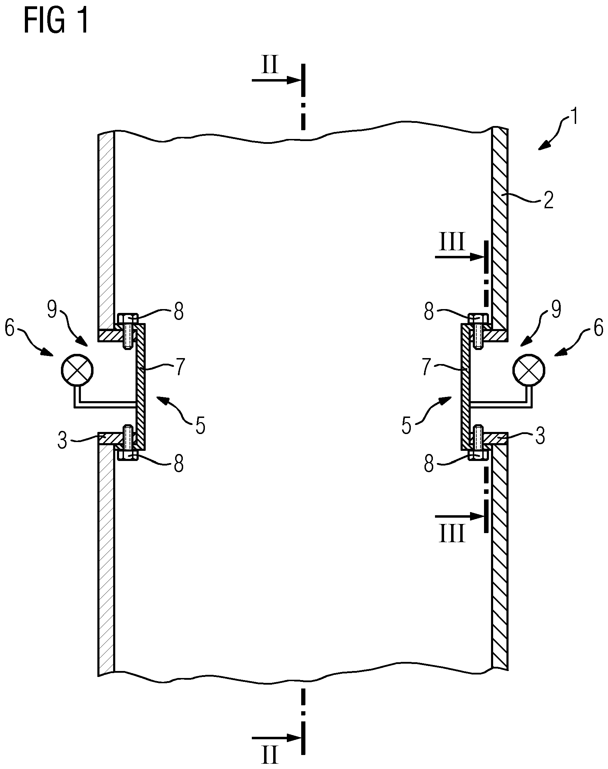

Fig. 1 shows a principle drawing in the shape of a principle cut-view of a tower device 1 according to an exemplary embodiment of the invention.

The tower device 1 comprises a hollow cylindrical tower structure 2. The tower structure 2 comprises a number of particularly, axially adjacently disposed wall elements.

The tower structure 2 may be installed on- or offshore. In either case, the tower structure 2 serves for supporting diverse functional units of an onshore or offshore wind turbine such as a nacelle, a rotor hub, respective rotor blades attached to the rotor hub, etc.

The tower structure 2 comprises a ring-like shaped wall reinforcement element 3 which serves to mechanically reinforce the tower structure 2. The wall reinforcement element 3 is welded to the tower structure 2 or respective wall elements of the tower structure 2.

A number of service platforms 4 are provided within the tower structure 2. The service platforms 4 are provided at different height levels of the tower structure 2. The service platforms 4 serve for building working sites for service personnel having entered the tower structure 2. The platform 4 depicted in fig. 1 is positioned in such a manner that service personnel may easily reach the wall reinforcement element 3.

As is discernible, marking device supporting elements 5 are provided within the tower structure 2. The marking device supporting elements 5 serve for supporting a marking device 6. The marking device 6 is adapted to visually mark the tower structure 2 at its outer circumference. The marking device 6 is built as a lighting element, particularly as a lamp. Hence, by means of the marking device 6 the tower device 1 may is easily detectable by airplanes, helicopters, boats, ships etc.

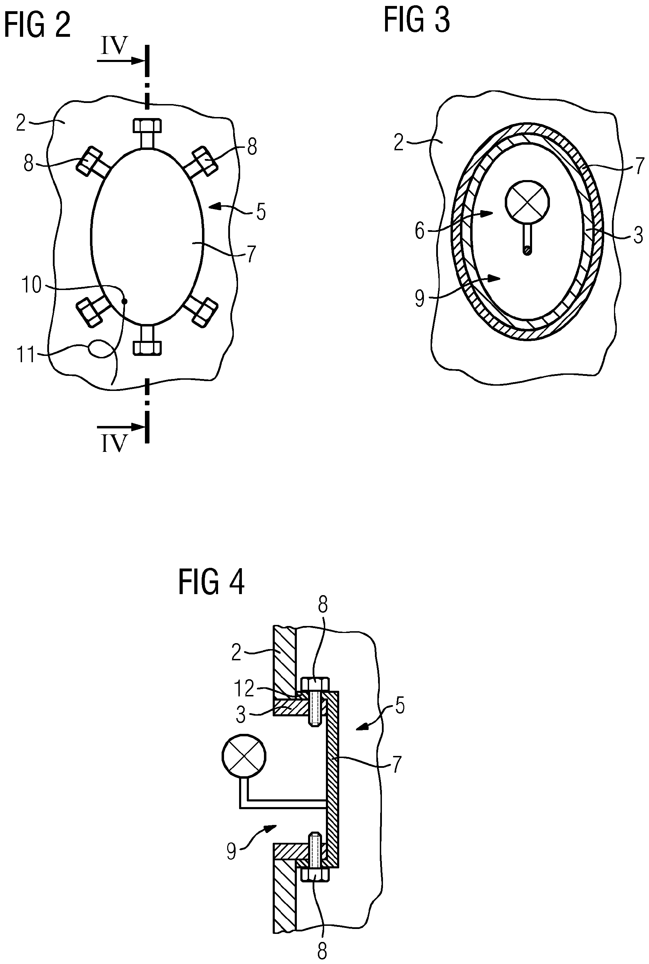

The marking device supporting element 5 comprises a base body 7 in the shape of an ovally shaped metal plate (cf. fig. 2 showing a cut-view through the tower device 1 of fig. 1. along the cutting lines II - II). The marking device supporting element 5 is removably attached to the wall reinforcement element 3 by means of an attachment means 8. The attachment means 8 allows for a bolted connection between the marking device supporting element 5 and the wall reinforcement element 3, i.e. the attachment means particularly, comprises a number of bolts and nuts. Hence, attachment of the marking device supporting element 5 to the wall reinforcement element 3 is particularly a force-fit.

The fig. show the attached state of the marking device supporting elements 5. As is discernible, the marking device supporting elements 5 are removably attached to the inner circumference of the tower structure 2, i.e. to the wall reinforcement element 3 in the attached state. Thereby, the marking devices 6 each penetrate through a radial opening 9 provided with the tower structure 2, i.e. between two axially adjacently disposed wall elements of the tower structure 2 respectively.

In such a manner, the marking device 6 may be easily and safely disposed at the outer circumference of the tower structure 2 from inside the tower structure by attaching the marking device supporting element 5 to the tower structure 2 or to the wall reinforcement element 3, respectively in such a manner that the marking device 6 penetrates through the opening 9.

Respective marking device supporting elements 5 are typically attached at different circumferential positions of the tower structure 2 or wall reinforcement element 3 so that the tower device 1 is sufficiently visually marked along its outer circumference of the tower structure 2.

Fig. 2 shows a cut-view of the tower device 1 of fig. 1 along the cutting lines II - II. The viewing direction is indicated by the arrows. Hence, fig. 2 depicts a view of the freely exposed surface of the marking device supporting element 5 in the attached state. As is discernible, a bore 10 is provided with the base body 7 which serves as a cable penetration for an electrical cable 11 supplying the marking device 6 with electrical energy.

Fig. 3 shows a cut-view of the tower device 1 of fig. 1 along the cutting lines III - III. The viewing direction is also indicated by the arrows. Hence, fig. 3 depicts a cut through the wall reinforcement element 3. Since the marking device 6 is disposed at the outer circumference of the tower structure 2, it is only indicated with a dotted line.

Fig. 4 shows a cut-view of fig. 2 along the cutting lines IV - IV. The viewing direction is also indicated by the arrows. Attachment of the marking device supporting element 5 to the wall reinforcement element 3 is depicted. Hence, attachment of the marking device supporting element 5 the wall reinforcement element 3 is provided in the region of a respective mounting flange 12 provided with the marking device supporting element 5, i.e. the base body 7 of the marking device supporting element 5.

Although the present invention has been described in detail with reference to the preferred embodiment, the present invention is not limited by the disclosed examples from which the skilled person is able to derive other variations without departing from the scope of the invention, which is defined by the appended claims.

## Claims

1. Tower device (1) for a wind turbine, comprising a hollow cylindrical tower structure (2), comprising:
- at least one opening (9) provided with the tower structure,
- at least one marking device supporting element (5), which is adapted to support or supports at least one marking device (6) for visually marking the tower structure (2) at its outer circumference, with
- the marking device supporting element (5) being adapted to be removably attachable to the inner circumference of the tower structure (2) by at least one attachment means (8), whereby
- in an attached state of the marking device supporting element (5), the marking device supporting element (5) is removably attached to the inner circumference of the tower structure (2) in such a manner that the marking device (6) is adapted to penetrate or penetrates through the opening (9) of the tower structure (2) so as to be disposed at the outer circumference of the tower structure (2),
**characterised in that** the opening (9) is provided with a, particularly ring-like, wall reinforcement element (3) at least partially reinforcing the wall thickness of the tower structure (2) so as to increase the mechanical stability of the tower structure (2),wherein the marking device supporting element (5) comprises a base body (7) being built as a, particularly circularly or ovally shaped, plate and a mounting flange (12) attached to the wall reinforcement element (3).

2. Tower device according to claim 1, wherein at least one marking device (6) is directly supported to the marking device supporting element (5).

3. Tower device according claim 1 or 2, wherein at least one marking device (6) is indirectly supported to the marking device supporting element (5) by means of a connecting cable.

4. Tower device according to any of the preceding claims, wherein the attachment means (8) is adapted to build a form- and/or force fit attachment of the marking device supporting element (5) with the inner circumference of the tower structure (2).

5. Tower device according to claim 4, wherein the attachment means (8) comprises bolt elements and/or latching elements.

6. Tower device according to any of the preceding claims, wherein the attachment means (8) is provided with the marking device supporting element (5).

7. Tower device according to any of the preceding claims, wherein the marking device (6) is built as a lamp.

8. Marking device supporting element (5) which is adapted to support or supports at least one marking device (6) for visually marking a tower structure (2) of a tower device (1) at its outer circumference, whereby the marking device supporting element (5) is adapted to be removably attachable to the inner circumference of a tower structure (2) of a tower device (1) according to any of the preceding claims, wherein the marking device supporting element (5) comprises a base body (7) being built as a, particularly circularly or ovally shaped, plate and a mounting flange (12) attachable to the wall reinforcement element (3).

## Patentansprüche

1. Turmvorrichtung (1) für eine Windenergieanlage mit einer hohlzylindrischen Turmkonstruktion (2), die Folgendes umfasst:
- mindestens eine in der Turmkonstruktion vorgesehene Öffnung (9),
- mindestens ein Markierungsvorrichtungshalteelement (5), das so ausgelegt ist, dass es mindestens eine Markierungsvorrichtung (6) zum optischen Markieren der Turmkonstruktion (2) an deren Außenumfang hält, oder eine solche hält, wobei
- das Markierungsvorrichtungshalteelement (5) so ausgelegt ist, dass es sich mit mindestens einem Befestigungsmittel (8) abnehmbar an dem Innenumfang der Turmkonstruktion (2) anbringen lässt, wodurch
- das Markierungsvorrichtungshalteelement (5) in seinem angebrachten Zustand abnehmbar auf eine Weise an dem Innenumfang der Turmkonstruktion (2) angebracht ist, dass die Markierungsvorrichtung (6) so ausgelegt ist, dass sie durch die Öffnung (9) der Turmkonstruktion (2) hindurch verläuft, oder durch diese hindurch verläuft und so an dem Außenumfang der Turmkonstruktion (2) angeordnet ist, **dadurch gekennzeichnet, dass** die Öffnung (9) mit einem insbesondere ringartigen Wandverstärkungselement (3) versehen ist, das die Wanddicke der Turmkonstruktion (2) zumindest teilweise verstärkt, so dass sich die mechanische Stabilität der Turmkonstruktion (2) erhöht, wobei das Markierungsvorrichtungshalteelement (5) einen Grundkörper (7) umfasst, der als insbesondere rund oder oval geformte Platte aufgebaut ist, und einen Montageflansch (12), der an dem Wandverstärkungselement (3) angebracht ist.

2. Turmvorrichtung nach Anspruch 1, wobei mindestens eine Markierungsvorrichtung (6) direkt von dem Markierungsvorrichtungshalteelement (5) gehalten wird.

3. Turmvorrichtung nach Anspruch 1 oder 2, wobei mindestens eine Markierungsvorrichtung (6) mithilfe eines Verbindungskabels indirekt an dem Markierungsvorrichtungshalteelement (5) gehalten wird.

4. Turmvorrichtung nach einem der vorhergehenden Ansprüche, wobei das Befestigungsmittel (8) so ausgelegt ist, dass es eine form- und/oder kraftschlüssige Befestigung des Markierungsvorrichtungshalteelements (5) an dem Innenumfang der Turmkonstruktion (2) aufbaut.

5. Turmvorrichtung nach Anspruch 4, wobei das Befestigungsmittel (8) Schraubenelemente und/oder Verriegelungselemente umfasst.

6. Turmvorrichtung nach einem der vorhergehenden Ansprüche, wobei das Befestigungsmittel (8) an dem Markierungsvorrichtungshalteelement (5) vorgesehen ist.

7. Turmvorrichtung nach einem der vorhergehenden Ansprüche, wobei die Markierungsvorrichtung (6) als Leuchte aufgebaut ist.

8. Markierungsvorrichtungshalteelement (5), das so ausgelegt ist, dass es mindestens eine Markierungsvorrichtung (6) zum optischen Markieren einer Turmkonstruktion (2) einer Turmvorrichtung (1) an deren Außenumfang hält, oder eine solche hält, wodurch das Markierungsvorrichtungshalteelement (5) so ausgelegt ist, dass es sich abnehmbar an dem Innenumfang einer Turmkonstruktion (2) einer Turmvorrichtung (1) nach einem der vorhergehenden Ansprüche anbringen lässt, wobei das Markierungsvorrichtungshalteelement (5) einen Grundkörper (7) umfasst, der als insbesondere rund oder oval geformte Platte aufgebaut ist, und einen Montageflansch (12), der sich an dem Wandverstärkungselement (3) anbringen lässt.

## Revendications

1. Dispositif de tour (1) pour une éolienne, comprenant une structure de tour cylindrique creuse (2), comprenant :
- au moins une ouverture (9) fournie avec la structure de tour,
- au moins un élément de support de dispositif de signalisation (5), qui est conçu pour porter ou porte au moins un dispositif de signalisation (6) pour la signalisation visuelle de la structure de tour (2) au niveau de sa circonférence externe, avec
- l'élément de support de dispositif de signalisation (5) étant conçu pour pouvoir être fixé de manière amovible sur la circonférence interne de la structure de tour (2) par au moins un moyen de fixation (8), moyennant quoi
- dans un état fixé de l'élément de support de dispositif de signalisation (5), l'élément de support de dispositif de signalisation (5) est fixé de manière amovible sur la circonférence interne de la structure de tour (2) d'une manière telle que le dispositif de signalisation (6) est conçu pour pénétrer ou pénètre à travers l'ouverture (9) de la structure de tour (2) de façon à être disposé au niveau de la circonférence externe de la structure de tour (2),
**caractérisé en ce que** l'ouverture (9) est munie d'un élément de renfort de paroi (3), en particulier de type annulaire, renforçant au moins partiellement l'épaisseur de paroi de la structure de tour (2) de façon à accroître la stabilité mécanique de la structure de tour (2), dans lequel l'élément de support de dispositif de signalisation (5) comprend un corps de base (7) qui est constitué sous la forme d'une plaque, en particulier à géométrie circulaire ou ovale, et une bride de montage (12) fixée à l'élément de renfort de paroi (3) .

2. Dispositif de tour selon la revendication 1, dans lequel au moins un dispositif de signalisation (6) est directement porté sur l'élément de support de dispositif de signalisation (5).

3. Dispositif de tour selon la revendication 1 ou 2, dans lequel au moins un dispositif de signalisation (6) est indirectement porté sur l'élément de support de dispositif de signalisation (5) au moyen d'un câble de liaison.

4. Dispositif de tour selon l'une quelconque des revendications précédentes, dans lequel le moyen de fixation (8) est conçu pour constituer une fixation par liaison de forme et/ou de force de l'élément de support de dispositif de signalisation (5) avec la circonférence interne de la structure de tour (2).

5. Dispositif de tour selon la revendication 4, dans lequel le moyen de fixation (8) comprend des éléments de type boulon et/ou des éléments de verrouillage.

6. Dispositif de tour selon l'une quelconque des revendications précédentes, dans lequel le moyen de fixation (8) est fourni avec l'élément de support de dispositif de signalisation (5).

7. Dispositif de tour selon l'une quelconque des revendications précédentes, dans lequel le dispositif de signalisation (6) est constitué sous la forme d'une lampe.

8. Élément de support de dispositif de signalisation (5) qui est conçu pour porter ou porte au moins un dispositif de signalisation (6) pour la signalisation visuelle d'une structure de tour (2) d'un dispositif de tour (1) au niveau de sa circonférence externe, moyennant quoi l'élément de support de dispositif de signalisation (5) est conçu pour pouvoir être fixé de manière amovible sur la circonférence interne d'une structure de tour (2) d'un dispositif de tour (1) selon l'une quelconque des revendications précédentes, dans lequel l'élément de support de dispositif de signalisation (5) comprend un corps de base (7) qui est constitué sous la forme d'une plaque, en particulier à géométrie circulaire ou ovale, et une bride de montage (12) pouvant être fixée à l'élément de renfort de paroi (3).
